# EUROPEAN PATENT APPLICATION

(11) **EP 1 745 885 A1**
(43) Date of publication of application: **24.01.2007**
(21) Application number: 06252739.5
(22) Date of filing: 25.05.2006
(51) Int. Cl.: B23Q 35/127

(54) **Processing device**

(30) Priority: 12.07.2005 JP 2005203338
(71) Applicant: FANUC LTD, Minamitsuru-gun, Yamanashi 401-0597 (JP)
(72) Inventor: Kawai, Tomohiko, Minamitsuru-gun, Yamanashi 401-0304 (JP); Ebihara, Kenzo, Fanuc Dai-virakaramatsu, Minamitsuru-gun, Yamanashi 401-0511 (JP)
(74) Representative: Billington, Lawrence Emlyn

(57) **Abstract**

A movable part is moved in a straight line by linear drive means. The movable part is provided with a sensor that scans a light and dark pattern on a light and dark patterned member. Also, the sensor outputs an output signal having a magnitude corresponding to the grayscale of the light and dark in the light and dark pattern. Cutting means controls the amount of cut of a tool on a work piece in accordance with the magnitude of the output signal from the sensor, to process the work piece. In this way the work piece is processed in accordance with the light and dark pattern.

## Description

### BACKGROUND OF THE INVENTION

### 1. Field of the Invention

The present invention relates to a processing device, such as a machine tool, that carries out precision processing.

### 2. Description of the Related Art

It is necessary to form a large number of protrusions or dimples, from several tens of thousand up to several hundred thousand, on the surface of optical waveguides used in liquid crystal displays and other equipment. In processing the molds used for forming this type of optical waveguide, conventionally the work piece (mold material) is positioned and stopped using the linear feed shaft of a transfer and processing machine, and protrusions or dimples are formed one at a time on the work piece. It requires up to about one second to form each protrusion or dimple on the work piece, so it can take several days to process the entire surface of a work piece.

Stopping a work piece at a specific position and forming protrusions or dimples one at a time in this way takes too much time and processing efficiency is poor. If the work piece could be processed while transferring the work piece at a constant speed without stopping the feed shaft, the time for positioning would not be required, so it would be efficient. However, no specific means to achieve this has yet been proposed.

If the speed of the linear feed shaft of the processing machine is increased, the speed of processing the protrusions or dimples would also increase, but more accurate speed control and position control would be required. With a transfer speed of 1m/second and processing dimples one at a time in a 0.1mm pitch means 10, 000 dimples are processed in one second. In high speed processing such as this, if small variations occur in the transfer speed, a small deviation will occur in the processing position of the dimple. In particular, for tools for manufacture of optical waveguides, the visual appearance of uniformity is important, and a lpmpositional deviation would appear as strain or distortion. For the case of a transfer speed of 1 meter/second, a positional deviation of 1 micrometer corresponds to a time deviation of 1 micro second. The control period of an ordinal numerically-controlled machine tools is several tens of microseconds, so high speed control without a deviation of 1 micro second or so is difficult, and processing of dimples at an accurate position at this speed is difficult.

Also, in optical waveguides, there may be a case where a coarse to fine distribution of dimples is formed so as to adjust the dispersion of light from the light source. To process such dimples, the position of each dimple must be specified in a processing program, as a result, processing of several hundreds of thousand dimples will cause the program very large.

### SUMMARY OF THE INVENTION

The processing device according to the present invention includes linear drive means that moves a movable part in a straight line, a light and dark patterned member with a light and dark pattern in which processing information is patterned in light and dark, and a sensor that moves relative to the light and dark pattern in synchronization with the movement of the movable part, and outputs a signal read from the light and dark pattern. The movable part includes a tool and cutting means that varies the amount of cut of the tool based on the signal from the sensor. When the movable part and the sensor are moving, the light and dark pattern is read by the sensor, and the cutting means varies the amount of cut of the tool in accordance with the signal received from the sensor and processing is carried out.

Furthermore, the processing device may take the following forms.

The sensor is arranged on the movable part, and the light and dark patterned member is fixed in a position facing the sensor.

The light and dark pattern is a light and dark pattern with a fixed pitch, and the cutting means thins out the signals received from the sensor, and the processing is carried out in association with a pitch that is an integer multiple of the pitch of the light and dark pattern.

The cutting means varies the amount of cut of the tool in accordance with the magnitude of the signal received from the sensor.

The cutting means varies the frequency of cut of the tool in accordance with the magnitude of the signal received from the sensor.

The movable part moves forward and back, and when the movable part is moving forward, the cutting means adjusts the amount of cut of the tool so that the tool processes the work piece. When the movable part is moving back, on the other hand, the cutting means adjusts the amount of cut of the tool so that the tool is withdrawn from the work piece.

In addition to the linear drive means, second linear drive means are provided that can move the linear drive means in a direction at right angles to both the direction of driving of the linear drive means and the direction of cutting of the cuttingmeans. Furthermore, a two-dimensional light and dark pattern is provided on the patterned member, and when the movable part and the sensor are moved in two directions at right angles by the linear drive means and the second linear drive means, the sensor scans the two-dimensional pattern of the patterned member, the cutting means controls the amount of cut of the tool on the work piece based on the signal output from the sensor, and the work piece is processed in two-dimensions by the tool.

The patterned member is installed on a rotating member that rotates in synchronization with the movable part, and the sensor is fixed so as to face the pattern of the patterned member.

The processing device according to the present invention has the above configuration, so fine processing such as processing dimples on molds used for forming optical waveguides can be carried simply and efficiently using a light and dark pattern.

### BRIEF DESCRIPTION OF THE DRAWINGS

The above and other objects and characteristics of the present invention will be clarified by the description of the embodiments herein below with reference to the accompanying drawings.
Fig. 1 is a figure for explaining the general outline of a processing device according to the present invention;
Fig. 2 is an explanatory diagram showing an example of the cutting means in the processing device of Fig. 1;
Fig. 3 shows an example (a) of the light and dark pattern used by the processing device of Fig. 1, and an example (b) of processing using the light and dark pattern;
Fig. 4 shows an example (a) of the light and dark pattern used by the processing device of Fig. 1, and an example (b) of processing with the pitch of the light and dark pattern thinned out;
Fig. 5 shows an example (a) of the light and dark pattern used by the processing device of Fig. 1, and an example (b) of processing in accordance with the gradation of the light and dark in the light and dark pattern;
Fig. 6 shows an example (a) of the light and dark pattern used by the processing device of Fig. 1, and shows an example (b) of processing carried out by changing the driving frequency with which the tool is driven in accordance with the gradation of the light and dark pattern;
Fig. 7 shows an example (a) of the light and dark pattern used by the processing device of Fig. 1, and an example (b) of processing carried out by changing the driving frequency with which the tool is driven in accordance with the gradation of the light and dark pattern;
Fig. 8 is an explanatory diagram explaining the operation of the tool in the processing device of Fig. 1;
Fig. 9 is an outline diagram of a processing device in which the movable part can move in two-dimensions by providing another linear drive means in addition to the linear drive means shown in Fig. 1;
Fig. 10 is a block diagram of the drive control unit that drives the piezo element of the cutting means in the processing device of Fig. 1 and Fig. 9; and
Fig. 11 is a diagram showing an example of a two-dimensional light and dark pattern used in the processing device of Fig. 9.

### DETAILED DESCRIPTION OF THE PREFERRED EMBODIMENTS

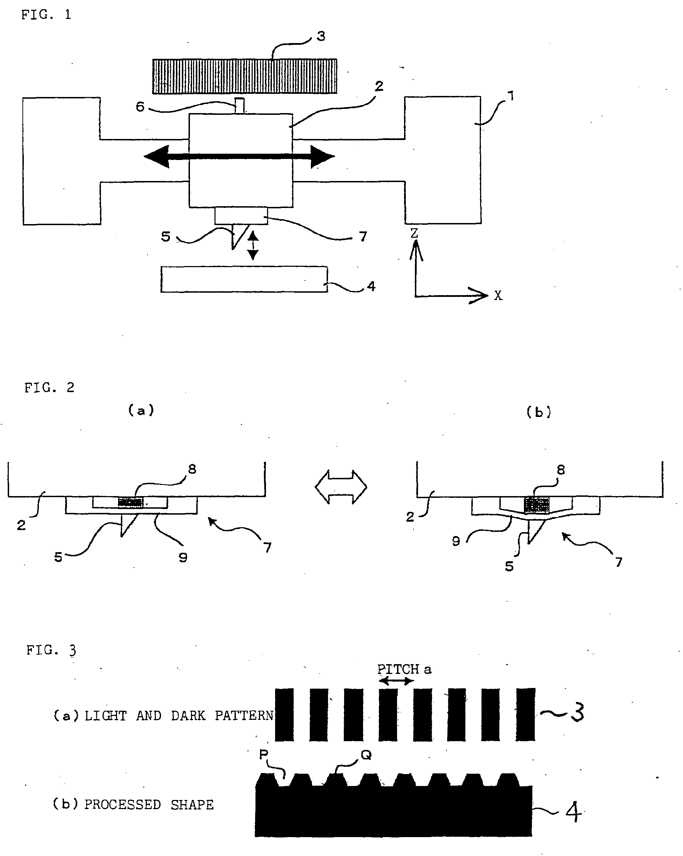

Fig. 1 is a figure for explaining the general outline of a processing device according to the present invention. In Fig. 1, the symbol 1 is linear drive means, that moves a movable part 2 linearly in the left to right direction of the figure (X-axis direction) by a motor, ball screw/nut mechanism, and similar, which are not shown in the drawings. A light and dark patterned member 3 is arranged parallel to the direction (X-axis direction) of movement of the movable part. A light and dark pattern in which light and dark vary along the direction of movement of the movable part 2 is formed on the light and dark patterned member 3. Also, the object 4 to be processed (work piece) is arranged along the direction of movement of the movable part 2.

A tool 5, a sensor 6, and cutting means 7 are provided on the movable part 2. The sensor 6 scans and reads in the light and dark pattern on the light and dark patterned member 3, and outputs a signal in accordance with the light and dark of the pattern. On the basis of the signal from the sensor 6, the cutting means 7 moves the tool 5 in a direction at right angles to the direction of movement of the movable part 2 (Z-axis direction), in other words, towards the work piece, to control the amount that the tool cuts the work piece.

Fig. 2(a) and FIG. 2 (b) are detailed explanatory diagrams of the cutting means 7. The tool 5 is installed on the surface of the movable part 2 that faces the work piece 4 via a leaf spring 9. Also, a piezo element 8 is installed between the leaf spring 9 and the movable part 2 to extend and contract the leaf spring 9.

When a voltage is applied to the piezo element 8, the piezo element 8 extends from the condition shown in Fig. 2(a) to the condition shown in Fig. 2(b) in accordance with the magnitude of the voltage. As a result, the leaf spring 9 is pressed, the tool 5 is moved in the cutting direction (Z-axis direction) to cut the work piece 4. During this time by moving the movable part 2 on which the tool 5 is installed in the X-axis direction, the work piece 4 is processed.

The tool 5 is installed on the leaf spring 9, and is not directly installed on the piezo element 8, so the force applied to the tool 5 is not directly transmitted to the piezo element 8. Therefore, the piezo element 8 which is weak against externally applied forces except the expansion and contraction direction is protected by the leaf spring 9.

Fig. 3 is a diagram showing an example of processing in accordance with the light and dark pattern, wherein the light and dark pattern provided on the light and dark patterned member 3 is a pattern in which light and dark areas are arranged at a constant pitch a as shown in Fig. 3(a).

The movable part 2 is moved by driving the linear drive means 1, and the piezo element 8 of the cutting means 7 is driven in accordance with the output of the sensor 6. Then, at the dark part of the light and dark pattern, the piezo element 8 is extended, and on the other hand, at the bright part of the light and dark pattern, the piezo element 8 recovers from the extension (contracts). Meanwhile, the movable part 2 is moving in the X-axis direction, so the sensor 6 and the tool 5 also move, and as a result, trapezoidal-shaped recesses P (dimples) are formed on the work piece 4 as shown in Fig. 3(b). Also, trapezoidal-shaped protrusions Q are formed between the recesses P. When a work piece 4 processed in this way is used as a mold for forming optical waveguides, these protrusions Q will form dimples on the optical waveguide. Even if the signal which drives the tool 5 is sufficiently fast, the response speed of the piezo element 8 is several tens of kHz, so the processed shape does not become rectangular, but becomes trapezoidal as shown in Fig. 3(b). Regardless of the speed of the movable part 2, the processing position always matches the light and dark pattern.

When a work piece 4 is processed with a pattern with light and dark areas arranged at a constant pitch, a common linear scale may be used for the pattern. In this case, the sensor 6 will serve as a reading head for a linear scale. In common linear drive devices, a linear scale feedback signal is used to control the position and speed of the movable part. However, in the present invention, the signal from the linear scale is used to vary the amount of cut of the tool 5. This point is a characteristic of the present invention. In order to control the position or speed based on the signal from the linear scale, a complex control loop and high speed calculation circuit are required. However, in the present invention, speed is constant so these are not required, and the control itself is simplified.

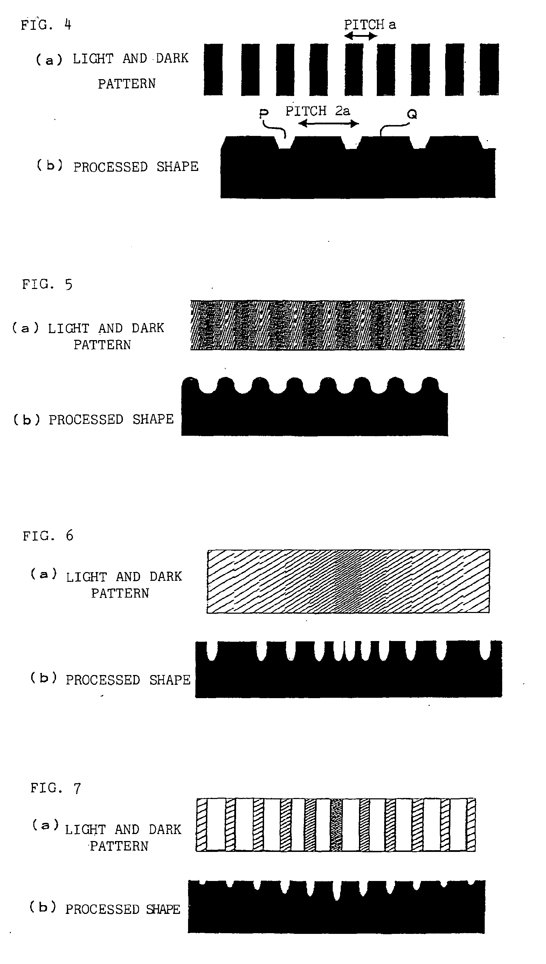

Figs. 4 through 7 show examples of light anddarkpatterns provided on the light and dark patterned member 3 and the processed shapes when processing is carried out using these patterns.

Fig 4 shows an example of processing in accordance with a pattern in which light and dark areas are arranged at constant pitch (see Fig. 4 (a)). By thinning our every second pulse from the signal of the sensor 6 obtained from the light and dark pattern, recesses P at double pitch can be processed, as shown in Fig. 4 (b). Recesses can be processed at an arbitrary pitch by thinning out every 1, 2, 3, ... pulse from the signal of the sensor 6 obtained from the light and dark pattern shown in Fig. 4 (a) . Also, if the signal after thinning is reversed in a reversing circuit, processing can be carried out with the recesses P and protrusions Q of Fig. 4(b) reversed.

Fig. 5 shows an example of processing using a light and dark pattern with continuously varied grayscale (see Fig. 5(a)). The light and dark patterns shown in Figs. 3 and 4 have two gradations: light and dark. However, in the light and dark pattern shown in Fig. 5 (a), the light and dark pitch is repeated at a constant pitch, and within one pitch, the grayscale is varied continuously. Then the specific shape at a constant pitch is processed as shown in Fig. 5(b) by driving the piezo element 8 of the cutting means 7 in accordance with the magnitude of the signal from the sensor 6 obtained by reading this light and dark pattern.

Fig. 6 shows an example of processing in which the frequency of driving the tool 5 is varied in accordance with the gradation of the light and dark pattern (see Fig. 6(a)). The grayscale of the light and dark pattern is varied in stages, and the signal (analog voltage) from the sensor 6 obtained by scanning the light and dark pattern is changed into frequency in a VF converter or similar in accordance with the magnitude to obtain pulses. Then the tool 5 is driven by the pulses obtained. In this way, the output voltage obtained along the direction of movement of the movable part 2 is simply converted into drive frequency to drive the piezo element 8. In this way, the density of dimples can be easily represented by the gradation of the light and dark pattern instead of a processing program.

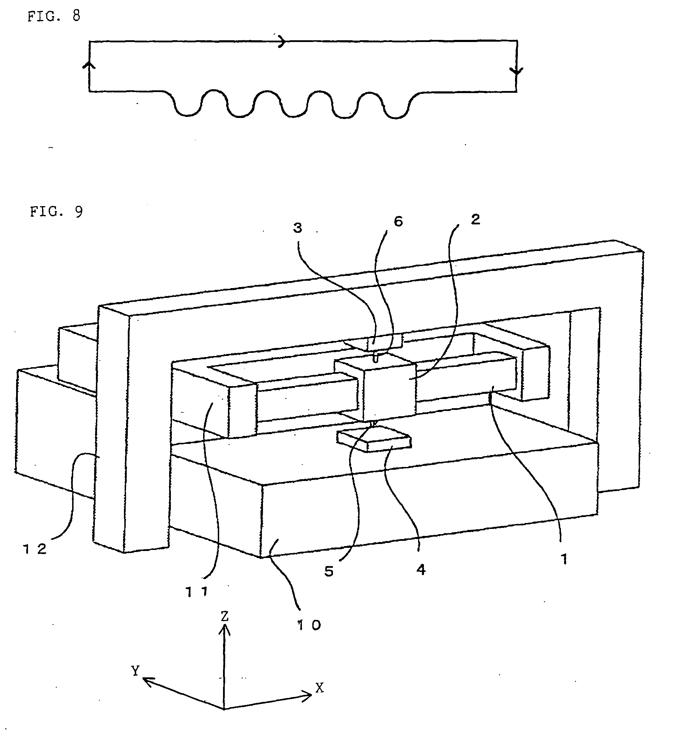

Fig. 7 is an example of processing in which the depth and pitch of recesses P (dimples) formed on a work piece are varied by varying the pitch and gradation of the light and dark pattern.

In this way, the shape pattern processed onto a work piece 4 is determined by the light and dark pattern provided on the light and dark patterned member 3. Therefore, a desired shape can be processed using a light and dark pattern only, without incorporating a processing program. Processing of tools for forming optical waveguides having many dimples can be easily carried out using this light and dark pattern.

In processing of the processing patterns described above, the movable part 2 is moved forward and backward, in the forward path (or the backward path) processing is carried out, but in the backward path (or the forward path), processing is not carried out. The movement of the tool 5 in this type of processing is shown in Fig. 8.

In Fig. 8, the movable part 2 moves in the horizontal direction of Fig. 8, and the tool 5 moves in the vertical direction of Fig. 8 when driven by the cutting means 7. When the movable part 2 is moving on the forward path, the piezo element 8 of the cutting means 7 is driven based on the signal from the sensor 6 obtained by reading the light and dark pattern, so that the tool 5 cuts the work piece 4. Fig. 8 shows processing in accordance with the light and dark pattern shown in Fig. 5. On the other hand, on the backward path of the movable part 2, the signal from the sensor 6 is ignored, so the cutting means 7 is not operated and the tool 5 is linearly moved to the original position separated from the work piece.

Fig. 9 is an outline diagram of an embodiment of the processing device according to the present invention.

In the embodiment, the processing device includes not only linear drive means 1 (hereafter referred to as the first linear drive means) that drives a movable part 2 in the X-axis direction, but also second linear drive means 11 that drives the movable part 2 in the Y-axis direction at right angles to the X-axis. By driving the movable part 2 in both the X-axis and the Y-axis, a work piece 4 is processed in a plane (X-Y plane). The processing device shown in Fig. 9 corresponds to the first linear drive means 1 that drives the movable part 2 in the X-axis direction shown in Fig. 1 that is also capable of being moved linearly in the Y-axis direction, which is perpendicular to both the X-axis and the Z-axis (the cutting movement direction of the tool 5) by the second linear drive means 11.

The work piece 4 is mounted on a base 10. The movable part 2 is arranged facing the work piece 4. The movable part 2 is moved in the X-axis direction by the first linear drive means 1. Furthermore, the first linear drive means 1 is driven at right angles to the X-axis direction and parallel to the plane of mounting of the work piece 4 (the Y-axis direction) by the second linear drive means 11. When driven by the second linear drive means 11, the movable part 2 also moves in the Y-axis direction, in addition to the movement in the X-axis direction of the first linear drive means 1.

Furthermore, the base 10 is provided with an inverse U-shaped light and dark pattern mounting member 12 which faces the mounting surface of the work piece 4 and on which a light and dark patterned member 3 having thereon a light and dark pattern scanned by a sensor 6 provided on the movable part 2 is mounted.

A tool 5 is arranged on a plane of the movable part 2 facing the work piece 4 via cutting means 7 as shown in Fig. 1. On the other hand, a sensor 6 is provided on the plane of the movable part 2 on the opposite side to the plane facing the work piece 4. The sensor 6 scans and reads the light and dark pattern on the light and dark patterned member 3 installed on the light and dark pattern mounting member 12, and outputs a signal in accordance with the pattern.

The first linear drive means 1 and the second linear drive means 11 drive the movable part 2 in the X-axis and Y-axis directions using a motor, a ball screw and nut mechanism, and similar, in the same manner as in the case of the drive mechanism on the tables of conventional machine tools.

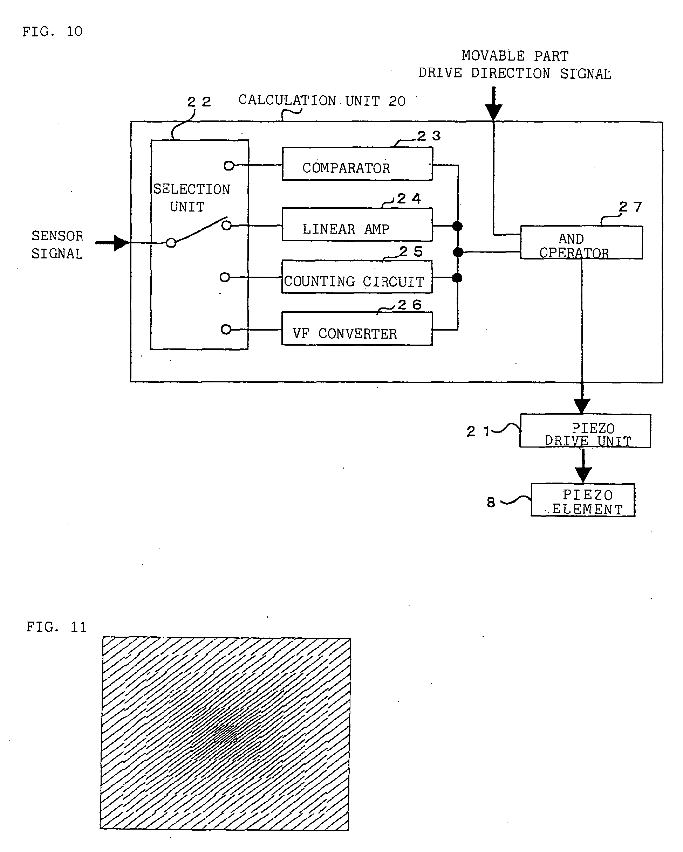

A two-dimensional light and dark pattern is provided on the light and dark patterned member 3 as shown in Fig. 11.

When the movable part 2 is driven at a predetermined speed in the positive X-direction by the first linear drive means 1, the sensor 6 on the movable part 2 scans and reads the light and dark pattern of the light and dark patterned member 3, and produces an output signal in accordance with the pattern. The work piece 4 is processed while controlling the amount of cut of the tool 5 based on the signal output from the sensor 6. Next, the movable part 2 is driven in the negative X direction to return to the original position. Then, the second drive means 11 is driven to move the first drive means 1 and the movable part 2 in the Y-axis direction a predetermined pitch. Then, the work piece 4 is again processed while the movable part 2 is moved in the positive X-axis direction by the first linear drive means 1 while controlling the amount of cut. By repeating this process, the work piece 4 is processed to form a three-dimensional processed surface on the work piece 4.

Fig. 10 is a block diagram of a drive control unit that drives the piezo element 8 of the cutting means 7.

The drive control unit includes a calculation unit 20 and a piezo drive unit 21. The signal from the sensor 6 and a drive direction signal of the movable part 2 are input to the calculation unit 20, and a drive signal is output to the piezo drive unit 21. The calculation unit 20 includes a selection unit 22, a comparator 23, a linear amplifier 24, a counting circuit 25, a VF converter 26, and an AND operator 27. The piezo drive unit 21 drives the piezo element 8.

The selection unit 22 selects the processing operation. In other words, the selection unit 22 switches the signal from the sensor 6 to one of the comparator 23, the linear amplifier 24, the counting circuit 25, and the VF converter 26, based on the selection by an operator.

When the comparator 23 is selected, a predetermined level of signal is output from the comparator 23 to the AND operator 27 when the signal from the sensor 6 exceeds a threshold value set in the comparator 23.

When the linear amplifier 24 is selected, the signal from the sensor 6 is amplified and output to the AND operator 27.

When the counting circuit 25 is selected, the signal from the sensor 6 is counted, and for each predetermined number of counts an output signal is output to the AND operator 27.

When the VF converter 26 is selected, the voltage output from the sensor 6 is converted into a sequence of pulses which has a frequency corresponding to the magnitude of the voltage, and output to the AND operator 27.

Two signals are input to the AND operator 27: one is a signal from one of the comparator 23, the linear amplifier 24, the counting circuit 25, and the VF converter 26, which is selected by the selection unit 22, and the other is a drive direction signal of the movable part 2 for the direction in which processing is actually carried out (in this embodiment, the positive X-axis direction). Moreover, the AND operator 27 outputs the output signal from the comparator 23, the linear amplifier 24, the counting circuit 25, or the VF converter 26, which is selected, to the piezo drive unit 21, and drives the piezo element 8 only when the movable part 2 is moving in the positive X-axis direction (in other words, only when the work piece 4 is being processed).

When the comparator 23 is selected by the selection unit 22, processing is carried out in the pattern shown in Fig. 3.

When the linear amplifier 24 is selected by the selection unit 22, the amount of cut of the tool 5 is varied in accordance with the grayscale of the light and dark pattern, so processing is carried out in the patterns shown in Figs. 5 and 7.

When the linear amplifier 24 is selected by the selection unit 22 and processed using the light and dark pattern shown in Fig. 3 (a), the output of the linear amplifier 24 slowly rises and slowly falls, so the processed shape differs from that shown in Fig. 3 (b) in that the slopes are more gentle. In contrast to this, when the comparator 23 is selected and processed using the light and dark pattern shown in Fig. 3(a), the output of the comparator 23 rises steeply and falls steeply, so the processed shape has steep, linear slopes, as shown in Fig. 3b.

When the counting circuit 25 is selected by the selection unit 22, an output signal is output every time the output from the sensor 6 reaches the number set in the counting circuit 25, and as a result, the processing as shown in Fig. 4 is carried out. In the example shown in Fig. 4, the setting of the counting circuit is 2, so processing is carried out by outputting an output signal every time the output from the sensor 6 reaches two. The counting circuit 25 may be provided with a reversing circuit that reverses the output of the counting circuit 25.

When the VF converter 26 is selected by the selection unit 22, a pulse sequence is output at frequencies corresponding to the magnitude of the output voltage of the sensor 6, and processing as shown in Fig. 6(b) is carried out.

As shown above, according to the present invention, fine processing can be carried out on the work piece using a light and dark pattern, so the present invention can be applied to the creation of molds used for forming several tens of thousands to several hundreds of thousands of dimples on the surface of optical waveguides. Furthermore, processing in which the depth of cut is varied can be carried out, as shown in Fig. 7, so fine and precise processing can be efficiently and simply carried out.

In the above embodiment, the light and dark patterned member 3 is arranged facing the movable part 2, and a sensor 6 provided on the movable part 2 scans and reads the light and dark pattern on the light and dark patterned member 3. In other words, the light and dark pattern is arranged along a straight line.

On the other hand, in the present invention, it is necessary that the light and dark pattern varies in accordance with the movement of the movable part 2. Therefore, the light and dark pattern may be a disk-shaped pattern that varies on the perimeter. A member with such a disk-shaped light and dark pattern may be installed on the shaft of the motor that drives the movable part 2, or the rotating feed shaft(the motor shaft or feed shaft of the linear drive means 1). Then, by fixing the sensor so as to face the position where the light and dark pattern of the light and dark patterned rotating member is installed, the signal from the sensor can be input to the calculation unit 20. In the examples shown in Fig. 1 and Fig. 9 where the light and dark pattern varies in a straight line, the sensor 6 moves and the light and dark patterned member 3 is fixed. However, in an example using a light and dark pattern that varies on a perimeter, the sensor is fixed and the light and dark patterned member rotates. For processing at a fixed pitch, an ordinal rotary encoder may be used instead of the light and dark pattern and the sensor.

## Claims

1. A processing device, comprising:
cutting means that controls the amount of cut of a tool on a work piece;
a movable part on which the tool and cutting means are installed;
linear drive means that moves the movable part in a straight line;
a patterned member having a pattern that represents processing information; and
a sensor that scans the pattern on the patterned member in synchronization with the movement of the movable part, and outputs a signal in accordance with the pattern which is read,
wherein, while the movable part is being moved by the linear drive means and the work piece is being processed by the tool, the cutting means controls the amount of cut of the tool on the work piece based on the signal output from the sensor.

2. The processing device according to claim 1, wherein the sensor is mounted on the movable part, and the patterned member is fixed in a position facing the sensor.

3. The processing device according to claim 1, wherein the pattern is a light and dark pattern with light and dark arranged alternately at a fixed pitch.

4. The processing device according to claim 1, wherein the pattern is a light and dark pattern with light and dark areas arranged alternately at a fixed pitch, and the cutting means thins out the signal received from the sensor to carry out processing synchronously with an integer multiple of the pitch of the light and dark pattern.

5. The processing device according to claim 1, wherein the pattern is a light and dark pattern in which light and dark areas are arranged so that the gradations thereof vary either in steps or continuously.

6. The processing device according to claim 1, wherein the cutting means controls the amount of cut of the tool on the work piece in accordance with the magnitude of the signal received from the sensor.

7. The processing device according to claim 1, wherein the cutting means varies the frequency of cutting by the tool in accordance with the magnitude of the signal received from the sensor.

8. The processing device according to claim 1, wherein the movable part moves forward and backward, and when the movable part is moving forward, the cutting means adjusts the amount of cut of the tool so that the tool processes the work piece, and when the movable part is moving backward, the cutting means adjusts the amount of cut of the tool so that the tool is withdrawn from the work piece.

9. The processing device according to claim 1, further comprising second linear drive means, in addition to the linear drive means, that can move the linear drive means in a direction at right angles to both the direction of driving of the linear drive means and the direction of cutting of the cutting means.

10. The processing device according to claim 9, wherein the patterned member comprises a two-dimensional light and dark pattern, the movable part and the sensor are moved in two directions at right angles by the linear drive means and the second linear drive means, so that the sensor scans the two-dimensional pattern of the patterned member, and the cutting means controls the amount of cut of the tool on the work piece based on the signal output from the sensor so that the work piece is processed in two-dimensions by the tool.

11. The processing device according to claim 1, wherein the patterned member is installed on a rotating member that rotates in synchronization with the movable part, and the sensor is fixed so as to face the pattern of the patterned member.

12. The processing device according to claim 1, wherein the linear drive means controls the position of the movable part using a signal from a linear scale, and uses the linear scale as the patterned member.
